# EUROPÄISCHE PATENTSCHRIFT

(11) **EP 0 410 261 B1**
(45) Veröffentlichungstag und Bekanntmachung des Hinweises auf die Patenterteilung: **08.09.1993**
(21) Anmeldenummer: 90113598.8
(22) Anmeldetag: 16.07.1990
(51) Int. Cl.: B60N 2/26

(54) **Sitz für ein Fahrzeug**
Vehicle seat
Siège de véhicule

(30) Priorität: 28.07.1989 DE 3925096
(43) Veröffentlichungstag der Anmeldung: 30.01.1991
(73) Patentinhaber: Volkswagen Aktiengesellschaft, 38436 Wolfsburg (DE)
(72) Erfinder: Sinnhuber, Ruprecht, Dipl.-Ing., D-3170 Gifhorn (DE); Münkner, Peter, Ing. grad., D-3306 Lehre-Flechtorf (DE)

(56) Entgegenhaltungen:
- PATENT ABSTRACTS OF JAPAN, Band 12, Nr. 409 (M-758)[3256], 28. Oktober 1988; & JP-A-63 149 241 (DAIHATSU) 22-06-1988

## Beschreibung

Die Erfindung betrifft einen Sitz für ein Fahrzeug gemäß dem Oberbegriff des Patentanspruchs 1.

Gattungsgemäße Fahrzeugsitze sind beispielsweise bekannt aus der DE-C-2 803 574 und der DE-A-3 716 619. Die Sitzkissen derartiger Fahrzeugsitze weisen Sitzkissenteile auf, die durch entsprechende Betätigungen in eine Kinderrückhalteeinrichtung umwandelbar sind. Der besondere Vorteil eines solchen Fahrzeugsitzes ist darin zu sehen, daß auf dem gleichen Fahrzeugsitz wahlweise erwachsene Fahrzeuginsassen oder Kinder Platz nehmen können.

In einer einen älteren Zeitrang aufweisenden, nicht vorveröffentlichten Patentanmeldung (DE-A-4 022 438) wird ein Fahrzeugsitz beschrieben, dessen Sitzkissen mehrteilig ausgeführt und in eine Kinderrückhalteeinrichtung umwandelbar ist. Das Sitzkissen weist im wesentlichen zwei Seitenteile auf, die um eine quer zum Sitz verlaufende Schwenkachse aus der Sitzkontur herausbewegbar sind, und zwischen denen ein Rückhalteelement angeordnet ist, das seinerseits um eine quer zum Sitz verlaufende Achse verdrehbar ist. Die Seitenteile werden im wesentlichen von Gelenkstangen getragen, in denen das Rückhalteelement verschiebbar geführt ist. Zum Zwecke einer solchen Führung sind die Enden eines innerhalb des Rückelementes angeordneten Trägers so mit den Gelenkstangen verbunden, daß an den dem Rückhalteelement zugewandten Innenseiten der Seitenteile ein Längsschlitz angebracht werden muß. Nun hat sich jedoch herausgestellt, daß mit fortschreitender Benutzungsdauer der Kinderrückhalteeinrichtung die Verschiebebewegung des Rückhalteelementes zwischen den Seitenteilen immer schwergängiger wird, weil sich Schmutz von den Schuhen der Kinder sowie ohnehin im Fahrzeuginneren vorhandener Staub in den Führungsschlitzen absetzt.

Der Erfindung liegt die Aufgabe zugrunde, gattungsgemäße Fahrzeugsitze so weiterzuentwickeln, daß die Kinderrückhalteeinrichtung an die Größe des jeweils mitgeführten Kindes optimal angepaßt werden kann. Dabei soll die Leichtgängigkeit des Rückhalteelementes auch bei fortschreitender Benutzungsdauer der Kinderrückhalteeinrichtung voll erhalten bleiben.

Diese Aufgabe wird gelöst durch die kennzeichnenden Merkmale des Patentanspruchs 1. Die Unteransprüche enthalten zweckmäßige Weiterbildungen der Erfindung.

Durch die vorgeschlagene Maßnahme wird der Sitz nicht nur funktionell verbessert, sondern auch optisch deutlich aufgewertet, weil die auf der Unterseite der Seitenteile angeordneten Führungsschlitze nicht sichtbar sind. Der optische Gesamteindruck wird zusätzlich noch weiter verbessert, wenn an den Seitenteilen Auswölbungen vorgesehen werden, um so die Entstehung eines Loches zwischen der Oberseite des Seitenteiles und der Rückenlehne zu verhindern, wenn die Seitenteile sich in der Grundstellung des Fahrzeugsitzes befinden. Die Grundstellung des Fahrzeugsitzes ist diejenige Stellung, bei der die Kinderrückhalteeinrichtung nicht in Funktion ist.

In der Zeichnung wird ein vorteilhaftes Ausführungsbeispiel der Erfindung beschrieben. Es zeigt
- Figur 1:: in schematischer Darstellung eine Vorderansicht,
- Figur 2:: eine Ansicht gemäß Schnittlinie II-II und
- Figur 3:: eine Seitenansicht eines erfindungsgemäßen Fahrzeugsitzes.

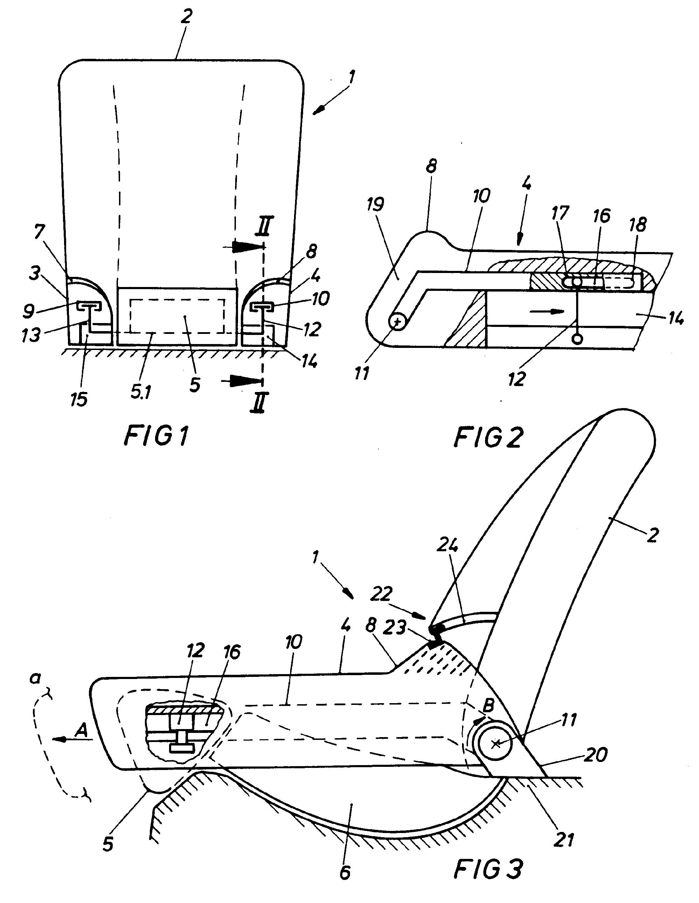

In Figur 1 ist mit 1 ein Fahrzeugsitz bezeichnet, der im wesentlichen eine Rückenlehne 2, Seitenteile 3 und 4, ein Rückhalteelement 5 mit einem Träger 5.1 sowie eine in dieser Ansicht nicht erkennbare Restsitzfläche 6 (s. Figur 3) aufweist. Die Seitenteile 3 und 4 sind an ihren der Rückenlehne 2 zugewandten Enden auf der Oberseite mit Auswölbungen 7 und 8 versehen und weisen sich in Fahrzeuglängsrichtung erstreckende Gelenkstangen 9 und 10 auf, die um eine quer zur Fahrtrichtung angeordnete und in Figur 2 mit 11 bezeichnete Schwenkachse drehbar sind. In den hier nach Art eines Hohlprofils ausgebildeten Gelenkstangen 9, 10 werden die Enden 12 und 13 des hier gestrichelt angedeuteten Trägers 5.1 verschiebbar geführt. Dabei durchsetzen die Enden 12, 13 die Seitenteile 4, 3 an deren Unterseite in Führungsschlitzen 14 und 15. Die Auswölbungen 7 und 8 sind bei den innerhalb der Sitskontur befindlichen Seitenteilen 3 und 4 im wesentlichen fluchtend zu der dem Fahrzeuginsassen zugewandten Fläche der Rückenlehne 2 angeordnet.

Figur 2 verdeutlicht den Schiebemechanismus, durch den das Rückhalteelement 5 in Pfeilrichtung A translatorisch aus der Kontur des Fahrzeugsitzes 1 herausbewegt werden kann. Die Gelenkstangen 9, 10 weisen zu diesem Zweck eine Führungsbahn 16 auf, in der das Ende 12 bzw. 13 des Trägers 5.1 gehalten ist. Durch Anschlagstellen 17 und 18 wird der Verschiebeweg des Rückhalteelementes 5 begrenzt. Ein zur Schwenkachse 11 hin geknickter Endbereich der Gelenkstangen 9, 10 ist mit 19 bezeichnet.

Weitere besonders wichtige Einzelheiten des erfindungsgemäßen Ausführungsbeispiels zeigt Figur 3. Man erkennt dort, daß die Rückenlehne 2 und das Seitenteil 4 über einen gemeinsamen Gelenkbeschlag 20 an der Schwenkachse 11 angelenkt sind. Der Gelenkbeschlag 20 seinerseits ist am hier mit 21 bezeichneten Fahrzeugaufbau befestigt. Auf der Auswölbung 8 ist schließlich noch eine Kraftübertragungsvorrichtung 22 vorgesehen, durch die im Falle eines Seitenaufpralls die vom Beckenbereich des Kindes auf das Seitenteil 4 ausgeübten Kräfte an der Rückenlehne 2 abstützbar sind. Zu diesem Zweck trägt die Auswölbung 8 ein scheiben-, platten- oder bolzenartiges Teil 23, das in einer mit der Rückenlehne 2 fest verbundenen Führungsschiene 24 geführt ist.

Aus Gründen der Übersichtlichkeit sind in der Zeichnung nicht alle Drehgelenke, die für die Umwandlung des Fahrzeugsitzes zur Rückhalteeinrichtung benötigt werden, dargestellt. So ist zum Beispiel das Rückhalteelement 5 um eine parallel zur Schwenkachse 11 verlaufende Drehachse verdrehbar und in verschiedenen Drehstellungen arretierbar. Auch am Gelenkbeschlag 20 sind Arretiervorrichtungen vorgesehen, durch die die Seitenteile 3, 4 und die Rückenlehne 2 in dem vom Fahrzeugbediener gewünschten Stellungen arretierbar sind. Das Rückhalteelement 5 ist darüber hinaus auch in verschiedenen Verschiebestellungen arretierbar.

Für die Umwandlung des in der Grundstellung befindlichen Fahrzeugsitzes 1 in eine Kinderrückhalteeinrichtung ist zunächst die nicht weiter dargestellte Verschiebearretierung des Rückhalteelements 5 zu lösen. Anschließend wird das Rückhalteelement 5 gemäß Pfeilrichtung A in die gestrichelt dargestellte und mit a bezeichnete Position bewegt. In dieser Position ist das Rückhalteelement 5 ebenfalls arretierbar und stellt somit keine Behinderung bei der Unterbringung des Kindes auf der Restsitzfläche 6 dar. Danach werden das Rückhalteelement 5 und die Seitenteile 3, 4 um die Schwenkachse 11 in Pfeilrichtung B geschwenkt. Durch erneute Verschiebung des Rückhalteelementes 5 und durch dessen Verdrehung zwischen den Seitenteilen 3 und 4 um eine parallel zur Schwenkachse 11 angeordnete Drehachse kann das Rückhalteelement 5 je nach Kindergröße in der Höhe so eingestellt werden, daß einerseits genügend Beinfreiheit vorhanden ist, und daß andererseits bei einem Fahrzeugunfall das Herausrutschen des Kindes aus der Kinderrückhalteeinrichtung vermieden wird. Durch die Schwenkbewegung um die Schwenkachse 11 und die anschließende Arretierung der Seitenteile 3 und 4 am Gelenkbeschlag 20 kann auch der Abstand zum Brust- und Abdominalbereich des Kindes optimal eingestellt werden.

Wenn das Kind aus der Rückhalteeinrichtung herausgenommen werden soll, ist lediglich das Rückhalteelement 5 mit den Seitenteilen 3, 4 in die Position a zurückzuschwenken. Nach dem Herausnehmen des Kindes erfolgt eine Verschiebung des Rückhalteelementes 5 entgegen der Pfeilrichtung A, so daß der in der Zeichnung dargestellte Ausgangszustand wieder hergestellt ist.

Besonders Figur 1 macht deutlich, daß durch die erfindungsgemäße Anordnung der Führungsschlitze 14, 15 auf der Unterseite der Seitenteile 3, 4 Schmutz von den Schuhen der Kinder gar nicht mehr in die Führungsbahn 16 gelangen kann, weil diese in den Seitenteilen vollständig gekapselt ist. Auch eventuell auf dem Fahrzeugaufbau 21 sich ansammelnder Schmutz wird nicht gegen die Wirkung der Schwerkraft in die Führungsschlitze 14, 15 und schon gar nicht in die Führungsbahn 16 hineingelangen können. Damit wird die Leichtgängigkeit der Verschiebung des Rückhalteelementes 5 zwischen den Seitenteilen 3,4 ohne zusätzlichen Aufwand an Dichtelementen gewährleistet. Bezüglich der Führung der Enden 12, 13 ist die Erfindung nicht auf das in der Zeichnung dargestellte Ausführungsbeispiel beschränkt. Es ist beispielsweise auch denkbar, das in Figur 1 dargestellte Querschnittsprofil für die Gelenkstangen 9, 10 beliebig zu drehen. Die Enden 12, 13 sind dann entsprechend immer so auszubilden, daß sie auf jeden Fall an der Unterseite der Seitenteile 3, 4 herausgeführt werden.

Eine besonders vorteilhafte Ausgestaltung der Erfindung stellt der Knickbereich 19 an den Gelenkstangen 9, 10 dar. Gerade bei einem Seitenaufprall ist es wichtig, daß die Gelenkstangen 9, 10, die vorzugsweise energieverzehrend nachgiebig ausgebildet sind, eine möglichst große Fläche im Beckenbereich des Kindes abstützen. Die Abstützwirkung des Seitenteiles 3, 4 kann darüber hinaus noch durch die Kraftübertragungsvorrichtung 22 verbessert werden. Diese bewirkt bei einem Seitenaufprall einen Formschluß zwischen dem abstützenden Seitenteil 3 oder 4 und der Rückenlehne 2. Eine besonders gute Abstützwirkung wird alternativ oder ergänzend zur Kraftübertragungsvorrichtung 22 auch durch eine hier nicht dargestellte Hartschaumstoffeinlage erzielt, die innerhalb der Auswölbung 7, 8 angeordnet ist.

Eine besonders gute Abstützwirkung wird auch durch die Anordnung der Schwenkachse 11 im Bereich der Rückenlehne 2, von der die Schwenkachse 11 im wesentlichen umschlossen ist, oberhalb der Restsitzfläche 6 erreicht. Außerdem kann auf diese Weise für die Verstellung der Rückenlehne 2 und für die Verstellung der Seitenteile 3, 4 ein gemeinsamer Drehgelenkbeschlag samt Arretiervorrichtung vorgesehen werden. Ein solches System ist dann besonders gut für eine Kinderrückhalteeinrichtung geeignet, die in einem Fahrzeugvordersitz integriert ist.

Das in der Zeichnung dargestellte Ausführungsbeispiel löst somit nicht nur das der Erfindung zugrundeliegende Problem, sondern bietet dem in der Kinderrückhalteeinrichtung befindlichen Kind auch bei Seitenaufprallunfällen sehr viel Sicherheit. Ein im Fahrzeugbau nicht zu vernachlässigender Aspekt ist auch der insgesamt positive optische Eindruck der erfindungsgemäßen Kinderrückhalteeinrichtung.

## Patentansprüche

1. Sitz (1) für ein Fahrzeug mit einer Rückenlehne (2) und einem mehrteiligen Sitzkissen sowie mit einer aus der Sitzkontur herausbewegbaren und aus Sitzkissenteilen gebildeten Rückhalteeinrichtung für ein auf der Restsitzfläche (6) mitgeführtes Kind, wobei die Rückhalteeinrichtung im wesentlichen zwei Seitenteile (3, 4) aufweist, welche durch mindestens ein Rückhalteelement (5) verbunden sind, dadurch gekennzeichnet, daß die Enden (12, 13) eines in dem Rückhalteelement (5) angeordneten Trägers (5.1) in wenigstens einer Gelenkstange (9, 10) je Seitenteil (3, 4) entlang eines Führungsschlitzes (14,15) verschiebbar geführt sind und daß die Führungsschlitze (14,15) auf der Unterseite der Seitenteile (3, 4) angeordnet sind.

2. Sitz nach Anspruch 1, dadurch gekennzeichnet, daß die Gelenkstangen (9, 10) um eine quer zum Sitz angeordnete Schwenkachse (11) drehbar sind, die im wesentlichen von der Rückenlehne (2) umschlossen und oberhalb der Restsitzfläche (6) angeordnet ist.

3. Sitz nach Anspruch 2, dadurch gekennzeichnet, daß die Gelenkstangen (9, 10) an ihrem der Schwenkachse (11) zugewandten Ende in Richtung der Schwenkachse geknickt (Knickbereich 19) sind.

4. Sitz nach Anspruch 1, dadurch gekennzeichnet, daß die Seitenteile (3, 4) an ihren der Rückenlehne (2) zugewandten Enden auf der Oberseite eine Auswölbung (7, 8) aufweisen, die bei den innerhalb der Sitzkontur befindlichen Seitenteilen (3, 4) im wesentlichen fluchtend zu der dem Fahrzeuginsassen zugewandten Fläche der Rückenlehne (2) angeordnet ist.

5. Sitz nach Anspruch 4, dadurch gekennzeichnet, daß die Auswölbung (7, 8) durch eine in das Seitenteil (3, 4) integrierte und entsprechend geformte Hartschaumstoffeinlage gebildet ist.

6. Sitz nach Anspruch 4, dadurch gekennzeichnet, daß die Auswölbungen (7, 8) der Seitenteile (3, 4) mit der Rückenlehne (2) über eine Kraftübertragungsvorrichtung (22) verbunden sind, durch die im Falle eines Seitenaufpralls die vom Beckenbereich des Kindes auf das Seitenteil (3 oder 4) ausgeübten Kräfte an der Rückenlehne (2) abstützbar sind.

7. Sitz nach Anspruch 2, dadurch gekennzeichnet, daß die Gelenkstangen (9, 10) und die Rückenlehne (2) um eine gemeinsame Achse (Schwenkachse 11) schwenkbar sind.

8. Sitz nach Anspruch 7, dadurch gekennzeichnet, daß für die Drehgelenkbewegung der Rückenlehne (2) und der Gelenkstangen (9, 10) ein gemeinsamer Drehgelenkbeschlag (20) vorgesehen ist.

## Claims

1. Seat (1) for a motor vehicle having a seat back (2) and a seat cushion comprising of more than one part as well as having a retaining device which can be moved out of the seat contour and which is formed from the seat cushion parts for the purpose of accommodating a child on the remaining seat surface (6), wherein the retaining device comprises substantially two side pieces (3, 4), which are connected by virtue of at least one retaining element (5), characterised in that the ends (12, 13) of a support (5.1) disposed in the retaining element (5) are displaceably guided along a guide slot (14, 15) in at least one articulated bar (9, 10) of each side piece (3, 4) and that the guide slots (14, 15) are disposed on the lower side of the side pieces (3, 4).

2. Seat according to claim 1, characterised in that the articulated bars (9, 10) are pivotable about a pivot axis (11) which is disposed transverse to the seat and which is enveloped substantially by the seat back (2) and disposed above the remaining seat surface (6).

3. Seat according to claim 2, characterised in that the articulated bars (9, 10) are bent (bend region 19) at their ends towards the pivot axis (11) in the direction towards the pivot axis.

4. Seat according to claim 1, characterised in that the side pieces (3, 4) comprise on the upper side at their ends towards the seat back (2) a curved surface (7, 8), which is disposed, in the case of the seat pieces (3, 4) located within the seat contour, substantially flush to the surface of the seat back (2) which is towards the vehicle occupants.

5. Seat according to claim 4, characterised in that the curved surface (7, 8) is formed by virtue of a hard foam material insert which is integrated in to the side piece (3, 4) and is shaped accordingly.

6. Seat according to claim 4, characterised in that the curved surfaces (7, 8) of the side pieces (3, 4) are connected to the seat back (2) by way of a force transmitting device (22), by virtue of which in the case of a lateral impact, the forces exerted by the lower body region of the child on the side piece (3) or (4) can be supported against the seat back (2).

7. Seat according to claim 2, characterised in that the articulated bars (9, 10) and the seat back (2) are pivotable about a common axis (pivot axis 11).

8. Seat according to claim 7, characterised in that a common pivot mounting (20) is provided for the articulated movement of the seat back (2) and the articulated bars (9, 10).

## Revendications

1. Siège (1) de véhicule, comprenant un dossier (2) et un coussin de siège en plusieurs parties et comprenant un dispositif de retenue d'un enfant transporté sur la surface restante (6) de siège, ce dispositif pouvant être déployé hors des contours du siège et étant formé par des parties du coussin de siège, le dispositif de retenue comprenant pour l'essentiel deux parties latérales (3, 4) reliées l'une à l'autre par l'intermédiaire d'au moins un élément (5) de retenue,
caractérisé en ce que les extrémités (12, 13) d'une poutrelle (5.1) disposée à l'intérieur de l'élément (5) de retenue sont guidées dans chaque partie latérale (3, 4) dans au moins une barre articulée (9, 10), de façon à coulisser le long d'une fente de guidage (14, 15), et en ce que les fentes (14, 15) de guidage sont disposées à la face inférieure des parties latérales (3, 4).

2. Siège selon la revendication 1, caractérisé en ce que les barres articulées (9, 10) peuvent pivoter autour d'un axe (11) de pivotement disposé transversalement au siège, l'axe étant essentiellement renfermé dans le dossier (2) et disposé au-dessus de la surface restante (6) du siège.

3. Siège selon la revendication 2, caractérisé en ce que les extrémités des barres articulées (9, 10), qui sont juxtaposées à l'axe (11) de pivotement, sont repliées (zone repliée 19) en direction de l'axe de pivotement.

4. Siège selon la revendication 1, caractérisé en ce que les parties latérales (3, 4) comportent, aux extrémités juxtaposées au dossier (2), à leur face supérieure, un bourrelet (7, 8) qui, lorsque les parties latérales (3, 4) se situent à l'intérieur des contours du siège, se trouve essentiellement aligné par rapport à la face du dossier (2) qui est tournée vers le passager du véhicule.

5. Siège selon la revendication 4, caractérisé en ce que le bourrelet (7, 8) est formé par un insert en mousse rigide intégré dans la partie latérale (3, 4) et conformé de façon appropriée.

6. Siège selon la revendication 4, caractérisé en ce que les bourrelets (7, 8) des parties latérales (3, 4) sont reliés au dossier (2) par l'intermédiaire d'un dispositif (22) de transmission des forces, par l'intermédiaire duquel les forces exercées par la région du bassin de l'enfant sur la partie latérale (3 ou 4), en cas de collision latérale, peuvent prendre appui sur le dossier (2).

7. Siège selon la revendication 2, caractérisé en ce que les barres articulées (9, 10) et le dossier (2) peuvent pivoter autour d'un axe commun (axe 11 de pivotement).

8. Siège selon la revendication 7, caractérisé en ce qu'une ferrure commune (20) d'articulation est prévue pour permettre les mouvements de pivotement du dossier (2) et des barres articulées (9, 10).
